# DEMANDE DE BREVET EUROPEEN

(11) **EP 4 554 326 A1**
(43) Date de publication de la demande: **14.05.2025**
(21) Numéro de dépôt: 23209025.8
(22) Date de dépôt: 10.11.2023
(51) Int. Cl.: H05B 3/22, H05B 3/14, B22F 3/00, B22F 3/105, B22F 12/10

(54) **PROCÉDÉ ET DISPOSITIF DE FRITTAGE RAPIDE MULTI-MATÉRIAUX**

(71) Demandeur: Centre de Recherche de l'Industrie Belge de la Céramique, 7000 Mons (BE)
(72) Inventeur: BOILET, Laurent, 59880 Saint-Saulve (FR); OLMEZ, Vedi, 59750 Feignies (FR); PETIT, Fabrice, 59600 Maubeuge (FR); RENNOTTE, Jacques, 7022 Mons (BE)
(74) Mandataire: AWA Benelux

(57) **Abrégé**

Un aspect de l'invention concerne un dispositif de frittage sans application de force (1) sur l'objet à fritter, adapté pour le frittage d'au moins un objet (5) tridimensionnel de géométrie complexe réalisé dans un matériau conducteur ou isolant électrique, ledit dispositif de frittage (1) comprenant :
- un milieu poreux résistif (3) agissant comme élément chauffant de l'objet (5), le milieu poreux résistif (3) comportant au moins une cavité intérieure (10) destinée à accueillir ledit objet (5), la paroi (10a) de la cavité intérieure (6) étant destinée à être en contact direct ou indirect avec ledit objet (5);
- optionnellement une interface (4) destinée à être placée entre la paroi (10a) de la cavité intérieure (10) et ledit objet (5) lorsque le contact entre la paroi (10a) et l'objet (5) est indirect;
- des électrodes (2) pour amener le courant à travers le milieu poreux résistif (3).
ledit milieu poreux résistif (3) étant configuré pour être conforme ou semiconforme à l'objet (5).

Un autre aspect de l'invention concerne le procédé de frittage mettant en oeuvre ce dispositif.

## Description

### Domaine technique de l'invention

La présente invention se rapporte à un procédé de frittage ultra-rapide pouvant s'appliquer à tout type de matériaux. Elle se rapporte également au dispositif de frittage mis en oeuvre lors du procédé.

### Arrière-plan technologique

Le frittage naturel est un processus long et coûteux. En effet, les fours de frittage conventionnels sont généralement limités en termes de vitesses de montée en température (typiquement de l'ordre de 10 à 15°C/min au maximum), augmentant d'autant plus la durée totale du traitement thermique. De plus, le frittage naturel nécessite généralement l'utilisation de températures de traitement thermique très élevées (supérieures à 1000°C) durant plusieurs heures. Ce temps de maintien important à haute température, nécessaire à l'obtention d'un taux de densification suffisant, entraîne également une croissance granulaire, néfaste à l'obtention de propriétés mécaniques optimales.

Différentes technologies de frittage innovantes, telles que le frittage micro-ondes, le frittage par induction, le frittage par Spark Plasma Sintering (SPS), le frittage Flash ou le procédé UHS, ont été développées, permettant une diminution conséquente de la durée des traitements thermiques. Ces technologies de frittage rapide ont leurs propres avantages et inconvénients et peuvent être plus appropriées pour certaines applications spécifiques.

Le frittage micro-ondes permet une densification rapide des matériaux. Il offre des cycles de traitement courts et une bonne homogénéité des matériaux. Cependant, le frittage micro-ondes nécessite des équipements spécifiques coûteux et la pénétration des micro-ondes est fortement dépendante des propriétés des matériaux.

Le frittage par induction, quant à lui, permet également des montées en température très rapides. Dans le cas des matériaux conducteurs, essentiellement les métaux et les semi-conducteurs, cette technique a pour particularité de générer la chaleur directement à l'intérieur du matériau à chauffer. Dans le cas des matériaux ne permettant pas un couplage électromagnétique, notamment les matériaux céramiques ou les matériaux poreux, il est nécessaire d'utiliser un suscepteur, généralement en graphite. Cette technologie présente de nombreux atouts par rapport aux méthodes de chauffe plus classiques : la vitesse de chauffe élevée permet une réduction des temps de cycle et donc une faible consommation d'énergie. Néanmoins, cette technique nécessite différents composants tels qu'un convertisseur, un adaptateur, un inducteur et un système de refroidissement approprié, qui la rendent encore très coûteuse.

Le frittage SPS permet également des frittages très rapides. Il offre une densification élevée, des cycles de traitements courts qui sont généralement inférieurs à une heure et une bonne homogénéité des matériaux. Cependant, le SPS nécessite également des équipements spécifiques et coûteux. De plus, la poudre à densifier étant placée dans une matrice entre deux pistons, cette technologie reste peu adaptée au frittage de pièces complexes 3D. La contamination par le carbone composant généralement l'outillage peut également parfois être néfaste pour certains matériaux. Il est également possible d'utiliser le SPS sans charge (cavité dans laquelle la pièce à densifier est placée) : ce dispositif permet la densification de pièces 3D complexes sans déformation, mais ne permet pas un contrôle aussi précis de la température et nécessite toujours l'utilisation d'un courant très important.

Le frittage Flash permet d'atteindre des vitesses de montée en température très importantes et des durées de traitements très courtes de quelques minutes, voire quelques secondes. Cependant, ce frittage requiert un préchauffage des échantillons dans un four traditionnel et reste limité à certains matériaux et à une gamme de propriétés électriques intrinsèques, mais surtout à des tailles d'échantillons très réduites de l'ordre de quelques dizaines de mm³ pour les échantillons de type os de chien.

Enfin, le procédé le plus récent, le procédé UHS (Ultrafast High-temperature Sintering) consiste à placer un échantillon entre deux feuilles ou deux feutres généralement en graphite et à chauffer celui-ci par radiation, convection et conduction. Ce procédé permet des montées en température très rapides, pouvant atteindre plusieurs centaines de degrés par seconde. Cependant, maintenir un contact stable entre les éléments chauffants et la pièce à densifier reste compliqué, du fait de la déformation du graphite lors du chauffage rapide. De plus, l'épaisseur classique des pièces pouvant être traitées par ce procédé reste très faible, typiquement entre 0.5 et 1.5 mm, le haut et le bas de la pièce étant effectivement chauffés, mais la chaleur échangée au sein de l'échantillon étant souvent inefficace et ce d'autant plus que l'épaisseur de l'échantillon sera importante, entraînant une distribution de température très hétérogène. L'utilisation de poudres notamment graphite comme matériau poreux résistif, en remplacement de feutres ou de feuilles permet de résoudre ces limitations géométriques, mais peut engendrer des contaminations avec des réactions de surface de la pièce à densifier. D'autre part, le retrait de l'objet lors du frittage peut engendrer une réorganisation du lit de poudre et donc une modification des propriétés de celui-ci.

Aucune de ces technologies n'apparait donc parfaitement adaptée au frittage de pièces de géométrie complexe 3D sans limitation en termes de nature du matériau à densifier.

### Résumé de l'invention

La présente invention propose un procédé de frittage ultra-rapide permettant de combler ces limitations. Ce procédé permet le frittage d'une pièce crue de géométrie 3D complexe quelle qu'en soit la nature (céramique, métallique, composite) ou ses propriétés intrinsèques, notamment qu'elle soit électriquement conductrice ou non.

Le procédé de frittage repose sur l'utilisation d'un élément chauffant formé d'un milieux poreux résistif qui entoure l'objet à densifier avec un contact direct ou indirect avec ce dernier. Le milieu poreux résistif est conforme ou semi-conforme à l'objet. Par conforme, on entend le fait que l'élément chauffant adopte une géométrie homothétique à celle de l'objet à densifier. Ainsi, si il est conforme, l'élément chauffant s'ajuste parfaitement à la géométrie externe de l'objet. Si il est semi-conforme, l'élément chauffant est conçu de manière à constituer une cavité interne destinée à accueillir une interface présentant une géométrie et des dimensions proches de celles de l'objet à densifier.

Dans chacun des cas, la (semi)conformation de l'élément chauffant à la géométrie de l'objet à fritter permet d'optimiser les transferts de chaleur et de minimiser les gradients thermiques dans la pièce.

Plus précisément, la présente invention se rapporte à un dispositif de frittage sans application de force adapté pour le frittage d'au moins un objet tridimensionnel de géométrie complexe réalisé dans un matériau conducteur ou isolant électrique, ledit dispositif de frittage comprenant :
- un milieu poreux résistif agissant comme élément chauffant de l'objet, le milieu poreux résistif comportant au moins une cavité intérieure destinée à accueillir ledit objet, la paroi de la cavité intérieure étant destinée à être en contact direct ou indirect avec ledit objet;
- optionnellement une interface destinée à être placée entre la paroi de la cavité intérieure et ledit objet lorsque le contact entre la paroi et l'objet est indirect;
- des électrodes pour amener le courant à travers le milieu poreux résistif; ledit milieu poreux résistif étant configuré pour être conforme ou semi-conforme à l'objet,
pour un milieu poreux résistif conforme, la paroi de la cavité intérieure du milieu poreux résistif étant destinée à épouser la forme extérieure de l'objet en contact direct avec ledit objet;pour un milieu poreux résistif semi-conforme, l'interface étant placée sur la paroi de la cavité intérieure, la cavité intérieure étant configurée pour avoir des dimensions proches de celles dudit objet avec un volume délimité par l'interface qui est au maximum supérieure de 40%, de préférence au maximum supérieure de 30%, plus préférentiellement au maximum supérieure de 20% au volume de l'objet.

Par milieu poreux résistif, on entend un milieu semi-continu autour de l'objet à fritter dont les propriétés de conduction électrique sont telles qu'elles permettent un échauffement rapide dudit milieu par effet Joule et ce pour des courants et tensions modérés, typiquement de quelques dizaines d'ampères et de volts, respectivement.

Selon des modes de réalisation préférés, le dispositif de frittage présente une ou plusieurs des caractéristiques suivantes :
- les électrodes sont disposées au sein du milieu poreux résistif;
- l'interface présente une géométrie intérieure qui correspond à la géométrie extérieure de l'objet auquel cas le volume délimité par l'interface est égal au volume de l'objet;
- le milieu poreux résistif est choisi parmi une mousse solide, une poudre non compactée, une poudre compactée, une poudre compactée et mise à dimension, un matériau fibreux, et des billes formant de préférence une distribution monomodale;
- le milieu poreux résistif est choisi parmi les matériaux constitués du graphite, d'une céramique électrique conductrice ou d'un alliage métallique ou intermétallique, voire d'un mélange de ces matériaux;
- la porosité du milieu poreux résistif est comprise entre 15% et 80%;
- la résistivité du milieu poreux résistif est comprise entre 0.05 et 5 ohm.m.
- il est adapté pour fritter l'objet réalisé dans un matériau choisi parmi une céramique, un métal, un alliage métallique, un matériau vitreux, un intermétallique et un composite avec une matrice métallique ou céramique;
- il est adapté pour fritter l'objet ayant une des dimensions comprise entre quelques millimètres et plusieurs centimètres, voire dizaines de centimètres;
- le milieu poreux résistif comporte plusieurs cavités intérieures destinées chacune à accueillir un objet;
- le volume du milieu poreux résistif est supérieur ou égal au volume de la cavité intérieure ou au volume délimité par l'interface quand il y a une interface afin d'assurer une distribution homogène de la température autour de cette cavité;
- il comporte un système de contrôle de la température pour assurer une montée en température rapide et contrôlée du milieu poreux résistif et un système de protection permettant de confiner le courant électrique à l'intérieur du milieu poreux résistif.

Un autre aspect de l'invention concerne le procédé de frittage mettant en oeuvre le dispositif de frittage décrit ci-avant.

Plus précisément, il concerne un procédé de frittage mis en oeuvre à l'aide du dispositif de frittage décrit précédemment, caractérisé en ce qu'il comporte les étapes de :
- a) positionnement de l'objet au sein d'une cavité intérieure du milieu poreux résistif;
- b) circulation d'un courant électrique à travers le milieu poreux résistif destiné à produire par effet Joule une élévation de température dudit milieu poreux résistif;
- c) montée en température de l'objet à fritter par conduction et rayonnement.

Selon un mode de réalisation préféré, le temps de traitement incluant la montée en température et le maintien est compris entre 1 minute et 1 heure, plus préférentiellement entre 1 minute et 30 minutes.

Ce procédé peut s'appliquer à tous types de matériaux, isolants ou conducteurs électriques, céramiques, métalliques, composites, sans limitation de la géométrie 3D de l'objet à traiter.

### Brève description des figures

La figure 1 est une représentation schématique du dispositif de frittage selon l'invention comportant comme élément chauffant un milieu poreux résistif semi-conforme à l'objet à densifier avec une interface entre l'objet et le milieu poreux résistif.

La figure 2 est une représentation schématique du dispositif de frittage selon l'invention comportant comme élément chauffant un milieu poreux résistif conforme à l'objet à densifier.

### Description détaillée de l'invention

La présente invention se rapporte à un procédé de frittage qui est un procédé de frittage naturel, c.à.d. sans application d'une force. Il s'agit d'un procédé de frittage ultra-rapide avec typiquement des vitesses de chauffage supérieures à 100°C/min et des temps complets de traitement incluant la montée en température et le palier compris entre 1 minute et 1 heure, de préférence entre 1 minute et 30 minutes. Ce procédé permet d'atteindre des températures supérieures à 2000°C et d'assurer une densification de l'objet avec une densité relative supérieure ou égale à 98%, de préférence supérieure ou égale à 99%.

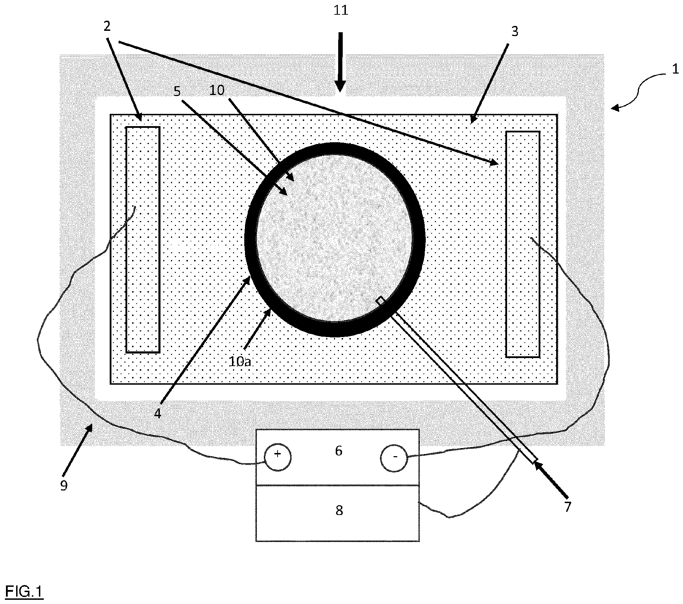

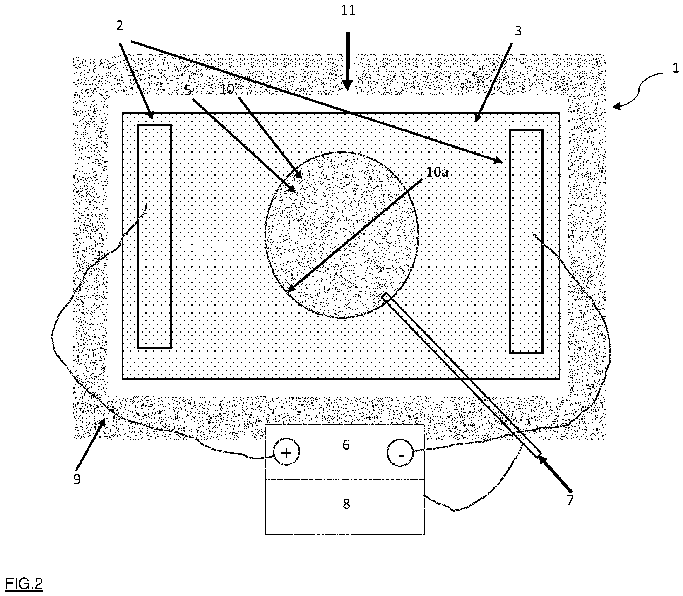

Le procédé de frittage est mis en oeuvre grâce au dispositif de frittage 1 destiné à densifier un objet 5 tel que schématisé aux figures 1 et 2. Le dispositif de frittage 1 comporte un milieu poreux résistif 3 agissant comme élément chauffant de l'objet à densifier et au moins deux électrodes 2 disposées de manière à amener le courant à travers le milieu poreux résistif de manière homogène et contrôlée. Le milieu poreux résistif 3 comporte une ou plusieurs cavités intérieures 10 préférentiellement non reliées destinées à accueillir chacune un objet à fritter. La cavité intérieure 10 est délimitée par une paroi 10a en contact direct avec l'objet 5 (figure 2) ou en contact indirect avec l'objet 5 via une interface 4 qui est préférentiellement rigide (figure 1).

Le milieu poreux résistif est conforme si il épouse parfaitement la géométrie externe de l'objet. Dans ce cas, il est en contact direct avec l'objet pour épouser sa forme extérieure (figure 2).

Le milieu est semi-conforme à l'objet si il délimite une cavité intérieure qui a des dimensions proches de celles de l'objet avec un contact indirect entre l'objet 5 et la paroi 10a de la cavité intérieure (figure 1). Dans cette configuration, une interface 4 est placée entre l'objet et l'élément chauffant. L'interface peut entre autres être nécessaire pour contenir certains milieux poreux résistifs qui ne sont pas cohésifs tels que des billes ou une poudre non compactée. On entend par dimensions proches que le volume intérieur délimité par l'interface est maximum supérieur à 40%, préférentiellement maximum supérieur à 30%, voire à 20% du volume de l'objet à densifier. L'interface peut présenter une géométrie intérieure qui correspond à la géométrie extérieure de l'objet auquel cas le volume délimité par l'interface est égal au volume de l'objet ou présenter une géométrie intérieure qui est différente de la géométrie extérieure de l'objet tout en respectant les valeurs maximales de différences de volume susmentionnées.

L'interface peut être électriquement conductrice ou isolante avec dans les deux cas un matériau adapté avec une bonne conductivité thermique et une bonne résistance aux hautes températures. Pour un matériau électriquement conducteur, on peut citer, à titre d'exemple, le graphite, un métal et ses alliages ou tout alliage conducteur tel que des alliages intermétalliques ou des alliages à haute entropie. Pour un matériau électriquement isolant, on peut citer, à titre d'exemple, l'alumine ou un matériau réfractaire tel que ceux à base de silice, de magnésie ou de zircone.

Le milieu poreux résistif forme un milieu semi-continu autour de l'objet à fritter. Le caractère semi-continu du milieu chauffant peut résulter de l'utilisation :
- d'un élément poreux cohésif & rigide tel qu'une mousse solide ou une poudre rendue compacte par pressage, coulage ou tout autre procédé (fabrication additive...) et post-usinée ou (post)formée de manière à épouser la géométrie de l'objet à fritter,
- d'un élément poreux cohésif & souple tel qu'un matériau fibreux formé de manière à épouser la géométrie de l'objet à fritter,
- d'un élément poreux discret constitué d'une poudre non compactée ou d'un assemblage de billes jointives, formant idéalement une distribution monomodale. Dans ce cas, une interface est positionnée entre le milieu poreux résistif et l'objet de manière à contenir les billes conductrices ou la poudre non compactée. La distribution monomodale des billes favorise leur écoulement physique et assure l'homogénéité du milieu semi-continu. Cette homogénéité garantit une circulation de courant optimale dans l'élément poreux résistif sans privilégier des chemins de moindre résistivité qui sont sources potentielles d'hétérogénéités thermiques.

Typiquement, la porosité du milieu poreux résistif est comprise entre 15% et 80%, la porosité étant mesurée par la méthode volumétrique consistant simplement à déterminer le rapport entre la masse et le volume que le milieu poreux occupe.

Le milieu poreux résistif peut contenir plusieurs cavités intérieures pour accueillir une pluralité d'objets. Ainsi, le milieu poreux peut contenir au moins deux objets séparés entre eux par le milieu poreux résistif. Pour les différents objets, le milieu poreux résistif peut être conforme ou semi-conforme.

Le matériau du milieu poreux résistif est adapté en termes de conductivité électrique, de résistance aux hautes températures et idéalement inerte chimiquement vis-à-vis de l'objet à densifier. De préférence, le milieu poreux résistif comprend ou est constitué de graphite, d'une céramique électrique conductrice ou d'un alliage métallique ou intermétallique. A titre d'exemple, le milieu poreux résistif peut être un alliage à base de tungstène, de cuivre ou de nickel.

Quant aux électrodes, elles sont constituées de matériaux conducteurs. Il peut s'agir du graphite ou de manière générale d'un métal ou d'un alliage conducteur. Les électrodes 2 sont disposées au sein du milieu poreux résistif 3. Elles sont conçues de manière à maximiser la surface de contact vers le milieu poreux résistif et à minimiser les pertes de courant. La taille des électrodes sera notamment adaptée à la taille des objets à densifier. Elles sont de plus réglables en position et orientation afin d'optimiser le passage du courant à travers le milieu poreux résistif et d'ajuster la distribution de températures autour de l'objet à densifier.

Le matériau destiné à être fritté peut être tout type de matériaux électriquement conducteurs ou pas. Il peut s'agir de céramiques y compris les matériaux vitreux, de métaux, d'alliages métalliques, d'intermétalliques, de composites avec une matrice métallique ou céramique ou encore d'un mélange de ces matériaux. Le matériau destiné à être fritté peut être obtenu notamment par pressage, extrusion, usinage, coulage et/ou impression 3D. L'objet peut revêtir toute forme complexe sans déformation lors du procédé de frittage ultra-rapide selon l'invention. Le dispositif permet de densifier des objets de toutes dimensions, i.e. comprises entre quelques millimètres et plusieurs centimètres. Typiquement, au moins une des trois dimensions peut avoir une taille atteignant au moins 10 cm.

Le dispositif de frittage comporte en outre une source d'alimentation électrique 6 permettant la circulation d'un courant important à travers le milieu poreux résistif et un système de contrôle de la température pour assurer une montée en température rapide et homogène du milieu poreux résistif. Typiquement, le système de contrôle de la température comporte un thermocouple 7, un pyromètre ou tout autre système adapté pour une mesure rapide et précise de la température. Le dispositif de frittage comporte également un régulateur 8 contrôlant le courant circulant à travers le milieu résistif, le régulateur étant couplé au thermocouple de régulation ou au pyromètre. Le dispositif de frittage comporte également un système de protection 9 permettant de confiner le courant électrique à l'intérieur du milieu poreux résistif agissant comme un isolant thermique permettant d'éviter les déperditions calorifiques. Le système de protection est conçu dans un matériau électriquement isolant et résistant aux hautes températures. Le dispositif comporte également un système de circulation de flux de gaz de protection 11, de type argon ou azote, par exemple.

Les essais suivants ont été réalisés en présence d'un milieu poreux résistif semi-conforme et d'une interface entre ce milieu et l'objet.

### Exemple 1 : Frittage rapide d'un barreau en zircone yttriée

Une pastille de 20 mm de diamètre et de 4 mm d'épaisseur a été obtenue par pressage uniaxial avec une pression de 2 tonnes dans un moule métallique à partir d'une poudre commerciale de zircone yttriée (TZ3YSE, Tosoh). Un barreau parallélépipédique de dimensions 18*4*4 mm (L*I*H) a été obtenu par découpe à l'intérieur de cette pastille. Deux électrodes en graphite de dimensions 5*1.5*2.5 cm (L*I*H) ont été placées dans une boîte en fibreux réfractaire de dimensions internes 8*8*3 cm (L*I*H). Les électrodes ont été reliées à une source électrique via des fils de platine de 2 mm de diamètre. Entre les deux électrodes a été placée une interface en alumine, sous la forme d'un cylindre creux de diamètre 20.5 mm et de hauteur 8 mm. L'échantillon en zircone yttriée a été déposé à l'intérieur de ce cylindre, de sorte qu'il n'y ait pas de contact direct entre les deux. Un couvercle en alumine a été déposé au-dessus du cylindre. De la poudre graphite sphérique agissant comme milieu poreux résistif, avec un diamètre moyen de 600 µm a été versée à l'intérieur de la boîte en fibreux réfractaire de façon à remplir totalement celle-ci et à recouvrir complètement les électrodes, ainsi que l'interface en alumine. Une plaque de même composition que la boîte a été déposée au-dessus de celle-ci afin de limiter les pertes de chaleur. L'ensemble a ensuite été placé dans une enceinte fermée, dans laquelle circule un flux de gaz d'argon. Un courant a été appliqué via la source électrique reliée aux électrodes en graphite. Celui-ci a été augmenté progressivement jusqu'à l'obtention, au bout de 5 minutes environ d'une puissance de 700 watts, puissance maintenue durant 30 secondes. Ces conditions ont permis d'obtenir une pastille en zircone yttriée de densité relative supérieure à 99%, sans défauts ni coloration, avec une taille de grains moyenne autour de 300-400 nm. Cet objet dense a été obtenu après un cycle de montée en température et palier de l'ordre de 5 à 6 minutes, au lieu d'environ 8 heures pour un frittage naturel conventionnel.

### Exemple 2 : Frittage rapide d'un scaffold en hydroxyapatite obtenu par fabrication additive

Une poudre d'hydroxyapatite a été utilisée pour fabriquer par stéréolithographie une pièce complexe de type gyroïde, de dimensions externes assimilables à un cube de 12 mm de côté. Après séchage, cette pièce a été déliantée par traitement thermique sous air jusque 600°C (vitesse de montée : 0.2°C/min) afin d'éliminer les composés organiques inhérents à la méthode de fabrication. Deux électrodes en graphite de dimensions 5*1.5*2.5 cm (L*I*H) ont été placées dans une boîte en fibreux réfractaire de dimensions internes 8*8*3 cm (L*I*H). Les électrodes ont été reliées à une source électrique via des fils de platine de diamètre 2 mm. Entre les deux électrodes a été placée une interface en alumine, sous la forme d'un cylindre creux de diamètre 13 mm et de hauteur 8 mm. L'échantillon en hydroxyapatite a été déposé à l'intérieur de ce cylindre, de sorte qu'il n'y ait pas de contact direct entre les deux. Un couvercle en alumine a été déposé au-dessus du cylindre. De la poudre graphite sphérique agissant comme milieu poreux résistif, avec un diamètre moyen de 600 µm a été versée à l'intérieur de la boîte en fibreux réfractaire de façon à remplir totalement celle-ci et à recouvrir complètement les électrodes, ainsi que l'interface en alumine. Une plaque de même composition que la boîte a été déposée au-dessus de celle-ci afin de limiter les pertes de chaleur. L'ensemble a ensuite été placé dans une enceinte fermée, dans laquelle circule un flux de gaz d'argon. Un courant a été appliqué via la source électrique reliée aux électrodes en graphite. Celui-ci a été augmenté progressivement jusqu'à l'obtention, au bout de 5 minutes environ d'une puissance de 650 watts, puissance maintenue durant 30 secondes. Ces conditions ont permis d'obtenir un *scaffold* en hydroxyapatite de densité relative supérieure à 99%, sans défauts ni coloration. Cet objet dense a été obtenu après un cycle incluant la montée en température et le palier de l'ordre de 5 à 6 minutes, au lieu d'environ 7 heures pour un frittage naturel conventionnel.

### Exemple 3 : Frittage rapide d'une pastille en carbure de tungstène cobalt

Une pastille de diamètre 20 mm et épaisseur 4 mm a été obtenue par pressage uniaxial avec une pression de 2 tonnes dans un moule métallique à partir d'une poudre commerciale de carbure de tungstène-cobalt (WC-Co 6%, Ceratizit). Deux électrodes en graphite de dimensions 5*1.5*2.5 cm (L*I*H) ont été placées dans une boîte en fibreux réfractaire de dimensions internes 8*8*3 cm (L*I*H). Les électrodes ont été reliées à une source électrique via des fils de platine de diamètre 2 mm. Entre les deux électrodes a été placée une interface en graphite, sous la forme d'un cylindre creux de diamètre 20.5 mm et de hauteur 8 mm. L'échantillon en carbure de tungstène cémenté a été déposé à l'intérieur de ce cylindre, de sorte qu'il n'y ait pas de contact direct entre les deux. Un couvercle en graphite a été déposé au-dessus du cylindre. De la poudre graphite sphérique agissant comme milieu poreux résistif, avec un diamètre moyen de 600 µm a été versée à l'intérieur de la boîte en fibreux réfractaire de façon à remplir totalement celle-ci et à recouvrir complètement les électrodes, ainsi que l'interface en graphite. Une plaque de même composition que la boîte a été déposée au-dessus de celle-ci afin de limiter les pertes de chaleur. L'ensemble a ensuite été placé dans une enceinte fermée, dans laquelle circule un flux de gaz d'argon. Un courant a été appliqué via la source électrique reliée aux électrodes en graphite. Celui-ci est augmenté progressivement jusqu'à l'obtention, au bout de 5 minutes environ d'une puissance de 700 watts, puissance maintenue durant 60 secondes. Ces conditions ont permis d'obtenir une pastille en carbure de tungstène-cobalt de densité relative supérieure à 98%, sans défauts. Cet objet dense a été obtenu après un cycle de montée en température et palier de l'ordre de 6 minutes, au lieu d'environ 8 heures pour un frittage naturel conventionnel.

## Revendications

1. Un dispositif de frittage (1) adapté pour le frittage d'au moins un objet (5) tridimensionnel sans application de force sur l'objet (5), ledit objet (5) pouvant être de géométrie complexe et réalisé dans un matériau conducteur ou isolant électrique, ledit dispositif de frittage (1) comprenant :
- un milieu poreux résistif (3) agissant comme élément chauffant de l'objet (5), le milieu poreux résistif (3) comportant au moins une cavité intérieure (10) destinée à accueillir ledit objet (5), la paroi (10a) de la cavité intérieure (10) étant destinée à être en contact direct ou indirect avec ledit objet (5);
- optionnellement une interface (4) destinée à être placée entre la paroi (10a) de la cavité intérieure (10) et ledit objet (5) lorsque le contact entre la paroi (10a) et l'objet (5) est indirect;
- des électrodes (2) pour amener le courant à travers le milieu poreux résistif (3);
ledit milieu poreux résistif (3) étant configuré pour être conforme ou semi-conforme à l'objet (5),
pour un milieu poreux résistif conforme, la paroi (10a) de la cavité intérieure (10) du milieu poreux résistif (3) étant destinée à épouser la forme extérieure de l'objet (5) en contact direct avec ledit objet (5);
pour un milieu poreux résistif (3) semi-conforme, l'interface (4) étant placée sur la paroi (10a) de la cavité intérieure (10), la cavité intérieure (10) étant configurée pour avoir des dimensions proches de celles dudit objet (5) avec un volume délimité par l'interface (4) qui est au maximum supérieure de 40%, de préférence au maximum supérieure de 30%, plus préférentiellement au maximum supérieure de 20% au volume de l'objet (5).

2. Dispositif de frittage (1) selon la revendication précédente, **caractérisé en ce que** les électrodes (2) sont disposées au sein du milieu poreux résistif (3).

3. Dispositif de frittage (1) selon l'une des revendications précédentes, **caractérisé en ce que** l'interface (4) présente une géométrie intérieure qui correspond à la géométrie extérieure de l'objet (5) auquel cas le volume délimité par l'interface (4) est égal au volume de l'objet (5).

4. Dispositif de frittage (1) selon la revendication 1 ou 2, **caractérisé en ce que** l'interface (4) présente une géométrie intérieure qui est différente de la géométrie extérieure de l'objet (5) avec un volume délimité par l'interface (4) qui est supérieur au volume de l'objet (5).

5. Dispositif de frittage (1) selon l'une des revendications précédentes, **caractérisé en ce que** le milieu poreux résistif (3) est choisi parmi une mousse solide, une poudre non compactée, une poudre compactée, une poudre compactée et mise à dimension, un milieu poreux et des billes formant de préférence une distribution monomodale.

6. Dispositif de frittage (1) selon l'une des revendications précédentes, **caractérisé en ce que** le milieu poreux résistif (3) est choisi parmi les matériaux constitués du graphite, d'une céramique électrique conductrice et d'un alliage métallique ou intermétallique.

7. Dispositif de frittage (1) selon l'une des revendications précédentes, **caractérisé en ce que** la porosité du milieu poreux résistif (3) est comprise entre 15% et 80%.

8. Dispositif de frittage (1) selon l'une des revendications précédentes, **caractérisé en ce qu'**il est adapté pour fritter l'objet (5) réalisé dans un matériau choisi parmi une céramique, un métal, un alliage métallique, un matériau vitreux, un intermétallique et un composite avec une matrice métallique ou céramique.

9. Dispositif de frittage (1) selon l'une des revendications précédentes, **caractérisé en ce qu'**il est adapté pour fritter l'objet (5) ayant une des dimensions comprises entre quelques millimètres et plusieurs centimètres, voire dizaines de centimètres.

10. Dispositif de frittage (1) selon l'une des revendications précédentes, **caractérisé en ce que** le milieu poreux résistif (3) comporte plusieurs cavités intérieures (10) destinées chacune à accueillir un objet (5).

11. Dispositif de frittage (1) selon l'une des revendications précédentes, **caractérisé en ce que** le volume du milieu poreux résistif (3) est supérieur ou égal au volume de la cavité intérieure (10) ou au volume délimité par l'interface (4) quand il y a une interface (4).

12. Dispositif de frittage (1) selon l'une des revendications précédentes, **caractérisé en ce qu'**il comporte un système de contrôle de la température (7) pour assurer une montée en température rapide et contrôlée du milieu poreux résistif (3) et un système de protection (9) permettant de confiner le courant électrique à l'intérieur du milieu poreux résistif (3).

13. Un procédé de frittage mis en oeuvre à l'aide du dispositif de frittage (1) selon l'une des revendications précédentes, **caractérisé en ce qu'**il comporte les étapes de :
- a) positionnement de l'objet (5) au sein d'une cavité intérieure (10) dans le milieu poreux résistif (3) ;
- b) application d'un courant électrique à travers le milieu poreux résistif (3) destiné à produire par effet Joule une élévation de température dudit milieu poreux résistif (3) ;
- c) montée en température de l'objet (5) à fritter par conduction et rayonnement.

14. Procédé de frittage selon la revendication précédente, **caractérisé en ce que** le temps de traitement incluant la montée en température et le maintien est compris entre 1 minute et 1 heure.

15. Procédé de frittage selon la revendication précédente, **caractérisé en ce que** le temps de traitement incluant la montée en température et le maintien est compris entre 1 minute et 30 minutes.
